(19) Europäisches Patentamt

European Patent Office

Office européen des brevets

(11) **EP 2 905 075 B1**

(12) **EUROPEAN PATENT SPECIFICATION**

(45) Date of publication and mention
of the grant of the patent:
**03.04.2019 Bulletin 2019/14**

(21) Application number: **12885978.2**

(22) Date of filing: **03.10.2012**

(51) Int Cl.:
**B01J 29/80** *(2006.01)* **B01J 27/182** *(2006.01)*
**B01J 35/04** *(2006.01)*

(86) International application number:
**PCT/JP2012/075713**

(87) International publication number:
**WO 2014/054143 (10.04.2014 Gazette 2014/15)**

(54) **HONEYCOMB STRUCTURE**

WABENSTRUKTUR

STRUCTURE EN NID D'ABEILLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.08.2015 Bulletin 2015/33**

(73) Proprietor: **Ibiden Co., Ltd.**
**Ogaki-shi, Gifu 503-8604 (JP)**

(72) Inventors:
• **KUNIEDA, Masafumi**
**Ibi-gun**
**Gifu 501-0695 (JP)**
• **MURAKOSHI, Serika**
**Ibi-gun**
**Gifu 501-0695 (JP)**

(74) Representative: **Marschall, Stefan et al**
**Elbpatent**
**Marschall & Partner**
**Patent- und Rechtsanwaltskanzlei mbB**
**Bavariaring 26**
**80336 München (DE)**

(56) References cited:
**EP-A1- 2 324 905      EP-A1- 2 324 921
EP-A2- 2 845 646      WO-A1-2012/090922
WO-A1-2013/114172      JP-A- 2010 524 677
JP-A- 2011 121 055      JP-A- 2011 167 690
JP-A- 2011 510 899      JP-A- 2012 106 909
JP-A- 2012 136 407      JP-A- 2012 508 096
JP-A- 2012 522 636**

**Description**

Technical Field

The present invention relates to a honeycomb structure for purging NOx discharged from a diesel engine, using an SCR (selective catalytic reduction) system.

Background Art

As a catalyst carrier used for SCR systems, known is a carrier obtained by shaping a composition containing zeolite into a honeycomb form.

For example, Patent Literature 1 discloses a honeycomb structure in which phosphate based zeolite (SAPO) is used and about which the average diameter of macropores therein is adjusted into the range of 0.1 to 0.3 $\mu$m both inclusive and the porosity is adjusted into the range of 30 to 40% both inclusive. In this honeycomb structure, SAPO is used as the material thereof, and the pore structure is formed as described above, thereby making it possible to heighten the structure in NOx purging performance. Patent Literature 1 also states that in order to improve the purging performance, SAPO is subjected to ion exchange with, for example, Cu or Fe.

Citation List

Patent Literature

Patent Literature 1: WO 2011/061836 A1

Summary of Invention

Technical Problem

However, when an SAPO-used honeycomb structure as described above adsorbs water in the air, the structure is changed. Thus, when the honeycomb is observed, a shrinkage more than 0.1% is found out. By the shrinkage through the water adsorption and an expansion through dehydration, the honeycomb structure is cracked. When the ratio of Si/(Si + Al + P) in SAPO is made high in order to restrain the volume expansion, the structure is lowered in NOx purging performance.

In the meantime, an SAPO-used honeycomb structure may be deteriorated in NOx purging performance on the basis of the property of SAPO when exposed to a steam atmosphere of about 80°C temperature (the deterioration is called "hydration deterioration or deterioration by hydration" in the specification). When the temperature of an exhaust gas is not raised to a high temperature of about 700°C, the purging performance may continue to be kept in the low state.

In light of the problem in the prior art, the present invention has been made, and an object thereof is to provide a honeycomb structure restrained from being cracked and deteriorated by hydration while maintaining an excellent NOx purging performance of SAPO.

EP 2 324 905 A1 discloses a honeycomb structural body including a honeycomb unit having a first zeolite, a second zeolite, and an inorganic binder and having plural through holes divided by cell walls and arranged in a longitudinal direction thereof. The first zeolite includes a $\beta$ type zeolite and/or a ZSM-5 type zeolite and has primary particles having an average particle diameter of 0.01 $\mu$m or more and 0.1 $\mu$m or less. The second zeolite includes a phosphate group zeolite and has primary particles having an average particle diameter of 0.5 $\mu$m or more and 5 $\mu$m or less. The ratio between the mass of the first zeolite and the total mass of the first and second zeolites is 0.1 or more and 0.5 or less.

EP 2 845 646 A2 discloses a honeycomb catalyst that is excellent in NOx purifying performance and is capable of suppressing damage of a honeycomb unit during use of an exhaust gas purifying apparatus. The honeycomb catalyst includes a honeycomb unit with a plurality of through holes that are arranged in parallel in a longitudinal direction and partitions that are provided between the through holes, wherein the honeycomb unit includes a first zeolite, a second zeolite, and an inorganic binder; the first zeolite is a CHA-structured aluminosilicate having a Si/Al ratio of 15 to 50; the second zeolite is a silicoalumino-phosphate having a Si/(Si + Al + P) ratio of 0.1 to 0.25; and the volume ratio of the first zeolite to the second zeolite (first zeolite:second zeolite) is 75:25 to 90:10.

EP 2 324 921 A1 discloses a honeycomb structure having a honeycomb unit which contains inorganic particles and in which plural cells extending from a first end face to a second end face along a longitudinal direction are partitioned by cell walls. The honeycomb unit further contains at least one of a flake-like substance, a tetrapod-like substance, and a three-dimensional needle-like substance.

JP 2012 136407 A discloses a porous molding excellent in crack resistance containing silicoaluminophosphate (SAPO) and/or aluminophosphate (ALPO), said SAPO having a positive coefficient of linear expansion, and ALPO having a negative coefficient of linear expansion. A weight ratio (X)/(Y) between the weight (X) of SAPO and/or ALPO having a positive coefficient of linear expansion and the weight (Y) of ALPO having a negative coefficient of linear expansion is in the range of 0.125-9.

Solution to Problem

The present invention, which solves the afore-mentioned problems, is as follows:

(1) A honeycomb structure having a honeycomb unit that has a plurality of through holes arranged side by side with a partition wall therebetween to be extended in a longitudinal direction of the unit,
the partition wall comprising two zeolite species and an inorganic binder, wherein one of the two zeolite species is a silicoaluminophosphate (SAPO) having a composition ratio Si/(Si + Al + P) of 0.1 to 0.25, and the other species is an aluminosilicate having a CHA type structure (CHA) and a mole ratio Si/Al of 2 to 10, and wherein in the two zeolite species, the blend ratio between the raw materials SAPO and CHA (the ratio by mass of SAPO to CHA) is from 8 : 2 to 2 : 8.
(2) The honeycomb structure according to (1),
wherein the SAPO and the CHA are salts subjected to ion exchange with copper ions.
(3) The honeycomb structure according to any of (1) or (2), wherein the inorganic binder is a solid component contained in one or more selected from the group consisting of alumina sol, silica sol, titania sol, water glass, sepiolite, attapulgite and boehmite.
(4) The honeycomb structure according to any one of (1) to (3), wherein the honeycomb unit further includes one or more selected from the group consisting of an inorganic fiber, a scaly substance, a tetrapod-form substance, and a three-dimensional needle-form substance.
(5) The honeycomb structure according to (4), wherein the inorganic fiber is one or more selected from the group consisting of alumina, silica, silicon carbide, silica alumina, glass, potassium titanate, and aluminum borate,
the scaly substance is one or more selected from the group consisting of glass, white mica, alumina, and silica,
the tetrapod-form substance is zinc oxide, and
the three-dimensional needle-form substance is one or more selected from the group consisting of alumina, silica, silicon carbide, silica alumina, glass, potassium titanate, aluminum borate, and boehmite.

Advantageous Effects of Invention

According to the present invention, it is possible to provide a honeycomb structure restrained from being cracked and deteriorated by hydration while maintaining an excellent NOx purging performance of SAPO.

Brief Description of Drawings

Fig. 1 is a perspective view illustrating an example of the honeycomb structure of the present invention.
Fig. 2 is a sectional view illustrating an example of an exhaust gas purging device having a honeycomb structure of the present invention.
Fig. 3 is a perspective view illustrating another example of the honeycomb structure of the present invention.
Fig. 4 is a perspective view illustrating one out of honeycomb units that constitute the honeycomb structure in Fig. 3.
Fig. 5 is a graph showing the water-adsorption/dehydration volume change rate of a honeycomb structure produced in each of working examples and comparative examples versus the temperature thereof.

Description of Embodiments

The honeycomb structure of the present invention is a honeycomb structure having a honeycomb unit including two zeolite species, and an inorganic binder and having a plurality of through holes arranged side by side with a partition wall therebetween to be extended in a longitudinal direction of the unit, wherein one of the two zeolite species is a silicoaluminophosphate (SAPO) having a composition ratio Si/(Si + Al + P) of 0.1 to 0.25, and the other species is an aluminosilicate (CHA) having a composition ratio Si/Al of 2 to 10.
Hereinafter, the honeycomb structure of the present invention will be described in detail.
For reference, zeolite denotes, in a narrow sense, any aluminosilicate. However, in a broad sense, zeolite includes, in the category thereof, any silicoaluminophosphate (SAPO). In the present invention, the broad sense is adopted.

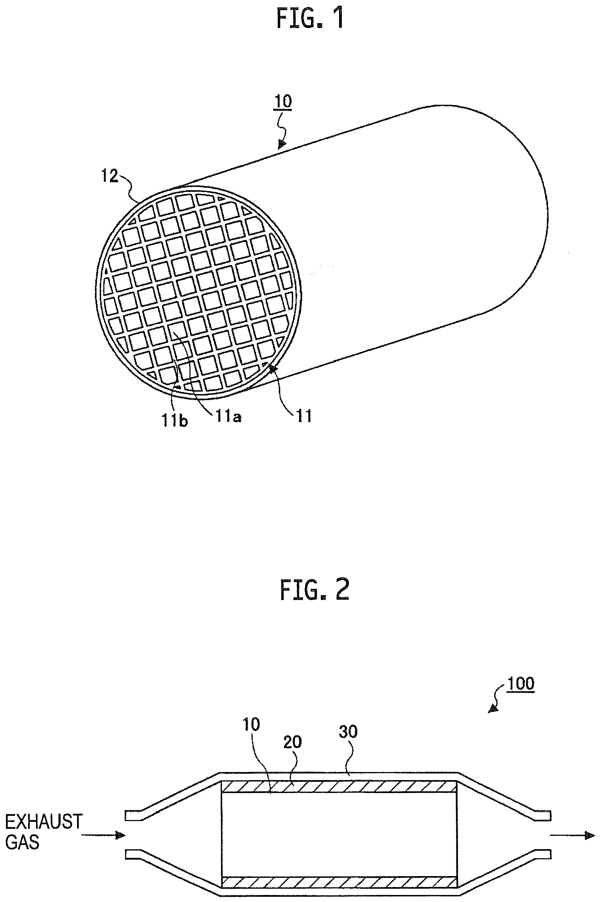

Fig. 1 illustrates an example of the honeycomb structure of the present invention. The example, which is a honeycomb structure 10, contains two zeolite species (SAPO and CHA), and an inorganic binder, and has a single honeycomb unit 11 having a plurality of through holes 11a arranged side by side with a partition wall 11b therebetween to be extended in the longitudinal direction of the unit. An outer circumferential coat layer 12 is formed on the outer circumferential surface of the honeycomb unit 11, which is a surface other than both end surfaces thereof.

When a honeycomb structure is formed by use of only an SAPO, a volume shrinkage thereof is generated, which follows water adsorption. In order to restrain such a shrinkage of the honeycomb structure of the present invention, an aluminosilicate (CHA), which undergoes a volume expansion when this salt adsorbs water, is together used to restrain this structure from undergoing an apparent volume change as a whole. In other words, an SAPO, which shows a positive (negative) volume change to dehydration (to water adsorption), and a CHA, which shows a negative (positive) volume change to dehydration (to water adsorption), are formed in a hybrid form, the individual materials show volume change behaviors exactly opposite to each other to water adsorption/dehydration, so that the hybrid material cancels an apparent volume change as a whole.

In more detail, $H_2O$ molecules are low in adsorption energy to be easily adsorbed onto Al, which constitutes zeolite. When Al adsorbs $H_2O$ molecules, the coordination number thereof changes from four to five so that the ion radius thereof increases from 0.39 Å to 0.48 Å. For this reason, an SAPO is dehydrated to be changed in lattice constant although this phenomenon depends on the composition ratio between Al, Si and P. Consequently, the SAPO expands in a proportion of about 1.3% substantially in each of the a-axis and b-axis directions while the SAPO shrinks in a proportion of about 0.4% in the c-axis direction. As a whole, the crystal structure thereof expands in a proportion of about 2.0%. In the meantime, a CHA is dehydrated to be changed in lattice constant, so that the CHA shrinks in a proportion of about 0.15% substantially in each of the a-axis and b-axis directions, and shrinks in a proportion of about 0.4% in the c-axis direction. As a whole, the crystal structure thereof shrinks in a proportion of about 0.7%.

In order to use only an SAPO to restrain a change in the volume, it can be supposed that the composition ratio Si/(Si + Al + P) is increased or the SAPO is fired to be decreased in specific surface area. However, it has been found out that the former case tends to cause the SAPO easily to be deteriorated by hydration, and the latter case tends to lower the SAPO somewhat in NOx purging performance. In the present invention, the use of an SAPO and a CHA in a hybrid form restrains a volume change as described above to make it possible to decrease the composition ratio Si/(Si + Al + P), and increase the surface specific area. This matter makes it possible to restrain the hybrid structure from being lowered in NOx purging performance, and being deteriorated by hydration.

According to the above-mentioned effects, the honeycomb structure of the present invention is restrained from being cracked by a volume change thereof and being deteriorated by hydration while maintaining NOx purging performance.

In the present invention, two zeolite species are used in a hybrid form. One of the two zeolite species is a silicoaluminophosphate (SAPO) having a composition ratio Si/(Si + Al + P) of 0.1 to 0.25. If the composition ratio is less than 0.1, the silicoaluminophosphate is small in the number of copper ion exchange sites therein to be lowered in NOx purging performance. Conversely, if the composition ratio is more than 0.25, the silicoaluminophosphate is increased in structural defects to be lowered in NOx purging performance.

In the SAPO, the composition ratio is desirably from 0.1 to 0.17, more desirably from 0.12 to 0.16.

The SAPO used in the present invention is desirably SAPO-34, and desirably has a particle diameter of 1 to 5 μm and a specific surface area of 250 to 550 $m^2$/g.

The other of the two zeolite species is an aluminosilicate (CHA) having a composition ratio Si/Al of 2 to 10. If the composition ratio is less than 2, the aluminosilicate is large in the proportion of Al therein to be thermally deteriorated with ease. Conversely, if the composition ratio is more than 10, the aluminosilicate does not expand when this salt adsorbs water. Thus, when the aluminosilicate is used in the form of a hybrid with any SAPO, which is high in NOx purging performance and shrinks when the salt adsorbs water, the effect of canceling the volume change is not produced.

In the CHA, the composition ratio is desirably from 2 to 8, more desirably from 2 to 6.

The CHA used in the present invention desirably has a particle diameter of 1 to 5 μm, and a specific surface area of 500 to 600 $m^2$/g.

In the honeycomb structure of the present invention, the blend ratio between the raw materials SAPO and CHA (the ratio by mass of the SAPO to the CHA) is from 8 : 2 to 2 : 8.

In accordance with a difference in the composition ratio between Al, Si and P in the SAPO and the CHA, the respective crystal structures thereof are varied in volume change rate (expansion rate or shrinkage rate) according to the above-mentioned mechanism. However, when the composition ratio Si/(Si + Al + P) in the SAPO is from 0.1 to 0.25 and the composition ratio Si/A1 in the CHA is from 2 to 10, the volume change rate shown when the materials are made into a honeycomb structure can be controlled into a low value by setting the blend ratio between the raw materials into the range of 8 : 2 to 2: 8. Thus, the honeycomb structure can be restrained from being cracked.

The blend ratio between the raw materials SAPO and CHA is more desirably from 7 : 3 to 5 : 5, even more preferably from 7 : 3 to 6 : 4. When the ratio is set to the range of 7 : 3 to 6 : 4, the rate of the water-adsorption/dehydration based volume change shown when the materials are made into a honeycomb structure can be adjusted into the range of ±0.14.

In the honeycomb structure of the present invention, the SAPO and the CHA are desirably salts subjected to ion exchange with copper ions. When the SAPO and the CHA have been subjected to ion exchange with copper ions, the honeycomb structure can be heightened in NOx purging performance.

About the SAPO or the CHA subjected to copper ions, the ion exchange proportion thereof is preferably from 2 to 6% by mass.

The inorganic binder contained in the honeycomb unit 11 is not particularly limited, and is preferably any solid component contained in, for example, alumina sol, silica sol, titania sol, water glass, sepiolite, attapulgite or boehmite to cause the honeycomb structure to keep a strength therefor. Two or more of such binders may be used together.

The content by percentage of the inorganic binder in the honeycomb unit 11 is preferably from 5 to 30% by mass, more preferably from 10 to 20% by mass. If the content by percentage of the inorganic binder in the honeycomb unit 11 is less than 5% by mass, the honeycomb unit 11 is lowered in strength. Conversely, if the content by percentage of the inorganic binder in the honeycomb unit 11 is more than 30% by mass, extrusion molding into the honeycomb unit 11 becomes difficult.

The honeycomb unit 11 preferably further contains one or more selected from the group consisting of an inorganic fiber, a scaly substance, a tetrapod-form substance, and a three-dimensional needle-form substance in order to be improved in strength.

It is desired that the inorganic fiber contained in the honeycomb unit 11 is one or more selected from the group consisting of alumina, silica, silicon carbide, silica alumina, glass, potassium titanate, and aluminum borate; the scaly substance is one or more selected from the group consisting of glass, white mica, alumina, and silica; the tetrapod-form substance is zinc oxide; and the three-dimensional needle-form substance is one or more selected from the group consisting of alumina, silica, silicon carbide, silica alumina, glass, potassium titanate, aluminum borate, and boehmite.

Any one of these substances is high in heat resistance, and makes it possible to sustain an advantageous effect of functioning as a reinforcing material without undergoing melt-damage or any other inconvenience even when used as a catalyst carrier in an SCR system.

The aspect ratio of the inorganic fiber contained in the honeycomb unit 11 is preferably from 2 to 1000, more preferably from 5 to 800, even more preferably from 10 to 500. If the aspect ratio of the inorganic fiber contained in the honeycomb unit 11 is less than 2, the advantageous effect of improving the honeycomb unit 11 in strength becomes small. Conversely, if the aspect ratio of the inorganic fiber contained in the honeycomb unit 11 is more than 1000, the following is caused: at the time of extrusion molding into the honeycomb unit 11, clogging in the mold or other inconveniences are generated; or the inorganic fiber is broken so that the advantageous effect of the improving the honeycomb unit 11 in strength becomes small.

The scaly substance denotes a thin substance. It is preferred that the thickness thereof is from 0.2 to 5.0 μm, the maximum length is from 10 to 160 μm, and the ratio of the maximum length to the thickness is from 3 to 250.

The tetrapod-form substance denotes a substance having a needle-form moiety extended three-dimensionally. It is preferred that the average needle length of the needle-form moiety is from 5 to 30 μm and the average diameter of the needle-form moiety is from 0.5 to 5.0 μm.

The three-dimensional needle-form substance denotes a substance in which needle-form moieties are bonded to each other at respective central portions of the needle-form moieties through an inorganic compound such as glass. It is preferred that the average needle length of the needle-form moieties is from 5 to 30 μm and the average diameter of the needle-form moieties is from 0.5 to 5.0 μm.

About the three-dimensional needle-form substance, the plurality of needle-form moieties may be three-dimensionally continuous to each other. It is preferred that the diameter of the needle-form moieties is from 0.1 to 5.0 μm, the length thereof is from 0.3 to 30.0 μm, and the ratio of the length to the diameter is from 1.4 to 50.0.

The content by percentage of the inorganic fiber, the scaly substance, the tetrapod-form substance and the three-dimensional needle-form substance in the honeycomb unit 11 is preferably from 3 to 50% by mass, more preferably from 3 to 30% by mass, even more preferably from 5 to 20% by mass. If the content by percentage of the inorganic fiber, the scaly substance, the tetrapod-form substance and the three-dimensional needle-form substance in the honeycomb unit 11 is less than 3% by mass, the advantageous effect of improving the honeycomb unit 11 in strength becomes small. Conversely, if the content by percentage of the inorganic fiber, the scaly substance, the tetrapod-form substance and the three-dimensional needle-form substance in the honeycomb unit 11 is more than 50% by mass, the content by percentage of the two zeolite species in the honeycomb unit 11 is lowered so that the NOx purging performance is deteriorated.

The porosity of the honeycomb unit 11 is preferably from 30 to 60%. If the porosity of the honeycomb unit 11 is less than 30%, an exhaust gas does not easily invade the inside of the partition wall 11b of the honeycomb unit 11 so that the two zeolite species is not effectively used to purge NOx. Conversely, if the porosity of the honeycomb unit 11 is more than 60%, the honeycomb unit 11 becomes insufficient in strength.

The porosity of the honeycomb unit 11 is measurable, using the mercury press-in method.

About the honeycomb unit 11, the aperture ratio is preferably from 50 to 75% in a cross section thereof that is perpendicular to the longitudinal direction. If the aperture ratio of the honeycomb unit 11 is less than 50% in the cross section perpendicular to the longitudinal direction, the two zeolite species are not effectively used to purge NOx. Conversely, if the aperture ratio of the honeycomb unit 11 is more than 75% in the cross section perpendicular to the longitudinal direction, the honeycomb unit 11 becomes insufficient in strength.

About the honeycomb unit 11, the density of the through holes 11a is preferably from 31 to 155 holes per square centimeter in any cross section thereof that is perpendicular to the longitudinal direction. If the density of the through holes 11a in the honeycomb unit 11 is less than 31 holes per square centimeter in the cross section perpendicular to the longitudinal direction, the two zeolite species do not contact an exhaust gas easily so that the honeycomb structure is lowered in NOx purging performance. Conversely, if the density of the through holes 11a in the honeycomb unit 11 is more than 155 holes per square centimeter in the cross section perpendicular to the longitudinal direction, the honeycomb structure 10 is increased in pressure loss.

The thickness of the partition wall 11b of the honeycomb unit 11 is preferably from 0.1 to 0.4 mm, more preferably from 0.1 to 0.3 mm. If the thickness of the partition wall 11b of the honeycomb unit 11 is less than 0.1 mm, the honeycomb unit 11 is lowered in strength. Conversely, if the thickness of the partition wall 11b of the honeycomb unit 11 is more than 0.4 mm, an exhaust gas does not easily invade the inside of the partition wall 11b of the honeycomb unit 11 so that the two zeolite species are not effectively used to purge NOx.

The thickness of the outer circumferential coat layer 12 is preferably from 0.1 to 2.0 mm. If the thickness of the outer circumferential coat layer 12 is less than 0.1 mm, the advantageous effect of improving the honeycomb structure 10 in strength becomes insufficient. Conversely, if the thickness of the outer circumferential coat layer 12 is more than 2.0 mm, the content per unit volume of the two zeolite species in the honeycomb structure 10 is lowered so that the structure 10 is lowered in NOx purging performance.

The form of the honeycomb structure 10 is not limited to any circularly columnar form. Examples thereof include rectangularly columnar forms, elliptically columnar forms, ovally columnar forms, and roundly-chamfered rectangularly columnar forms (for example, a roundly-chamfered triangularly columnar form).

The form of the through holes 11a is not limited to any rectangularly columnar form. Examples thereof include triangularly columnar forms, and hexagonally columnar forms.

The following will describe an example of a method for producing the honeycomb structure 10. Initially, a raw material paste is used and extruded to be shaped, this paste containing two zeolite species, and an inorganic binder, and further optionally containing one or more selected from the group consisting of an inorganic fiber, a scaly substance, a tetrapod-form substance, and a three-dimensional needle-form substance. In this way, a circularly columnar honeycomb shaped body is produced which has a plurality of through holes arranged side by side with a partition wall therebetween to be extended into the longitudinal direction of the shaped body.

The inorganic binder contained in the raw material paste is not particularly limited, and is added as, for example, alumina sol, silica sol, titania sol, water glass, sepiolite, attapulgite or boehmite. Two or more of such binders may be together used.

If necessary, to the raw material paste may be appropriately added an organic binder, a dispersing medium, a shaping aid, and/or others.

The organic binder is not particularly limited. Examples thereof include methylcellulose, carboxymethylcellulose, hydroxyethylcellulose, polyethylene glycol, phenolic resin, and epoxy resin. Two or more of such binders may be together used. The proportion of the added organic binder(s) is preferably from 1 to 10% by mass of the total of the two zeolite species, the inorganic binder, and the possible inorganic fiber, scaly substance, tetrapod-form substance and three-dimensional needle-form substance.

The dispersing medium is not particularly limited. Examples thereof include water, organic solvents such as benzene, and alcohols such as methanol. Two or more of such binders may be together used.

The shaping aid is not particularly limited. Examples thereof include ethylene glycol, dextrin, aliphatic acids, aliphatic acid soaps, and polyalcohols. Two or more of such binders may be together used.

When the raw material paste is prepared, it is preferred to mix the components therein with each other and knead the mixture. The components may be mixed by use of, for example, a mixer or an attritor, or kneaded by use of, for example, a kneader.

Next, the honeycomb shaped body is dried using a drying machine to produce a honeycomb dried body, examples of the machine including a microwave drier, a hot wind drier, a dielectric drier, a pressure-reduction drier, a vacuum drier, and freezing drier.

Furthermore, the honeycomb dried body is degreased to produce a honeycomb degreased body. Conditions for the degreasing may be appropriately selected in accordance with the species and the quantities of the organic substances contained in the honeycomb dried body. The temperature and the period therefor are preferably 400°C and 2 hours, respectively.

Next, the honeycomb degreased body is fired to produce a circularly columnar honeycomb unit 11. The firing temperature is preferably from 600 to 1200°C, more preferably from 600 to 1000°C. If the firing temperature is lower than 600°C, the sintering does not advance so that the honeycomb unit 11 becomes low in strength. Conversely, if the firing temperature is higher than 1200°C, the sintering advances excessively so that the reaction sites of the two zeolite species are decreased in number.

Next, a paste for an outer circumferential coat layer is painted onto the outer circumferential surface of the circularly columnar honeycomb unit 11, which is a surface other than both end surfaces thereof.

This outer circumferential coat layer paste is not particularly limited. Examples thereof include a mixture of an inorganic binder and inorganic particles, a mixture of an inorganic binder and an inorganic fiber, and a mixture of an inorganic binder, inorganic particles, and an inorganic fiber.

The inorganic binder contained in the outer circumferential coat layer paste is not particularly limited, and is added as, for example, silica sol or aluminum sol. Two or more inorganic binders may be together used. It is particularly preferred to add the inorganic binder as silica sol.

The inorganic particles contained in the outer circumferential coat layer paste are not particularly limited. Examples thereof include carbide particles such as silicon carbide particles, and nitride particles such as silicon nitride particles and boron nitride particles. Two or more of such particle species may be together used. Particularly preferred are silicon carbide particles since the particles are excellent in thermoconductivity.

The inorganic fiber contained in the outer circumferential coat layer paste is not particularly limited. Examples thereof include silica alumina fiber, mullite fiber, alumina fiber, and silica fiber. Two or more of such fibers may be together used. Particularly preferred is alumina fiber.

The outer circumferential coat layer paste may further contain an organic binder.

The organic binder contained in the outer circumferential coat layer paste is not particularly limited. Examples thereof include polyvinyl alcohol, methylcellulose, ethylcellulose, and carboxymethylcellulose. Two or more of such binders may be together used.

The outer circumferential coat layer paste may further contain balloons, which are fine hollow spheres made of a ceramic oxide, a pore-making agent, and/or others.

The balloons contained in the outer circumferential coat layer paste are not particularly limited. Examples thereof include alumina balloons, glass micro-balloons, volcanic soil balloons, fly ash balloons, and mullite balloons. Two or more of such balloon species may be together used. Particularly preferred are alumina balloons.

The pore-making agent contained in the outer circumferential coat layer paste is not particularly limited. Examples thereof include spherical acrylic particles, and graphite. Two or more pore-making agents may be together used.

Next, the honeycomb unit 11 on which the outer circumferential coat layer paste is painted is dried to solidify the paste. In this way, the (target) circularly columnar honeycomb structure 10 is produced. When the outer circumferential coat layer paste contains the organic binder, it is preferred to degrease the workpiece. Conditions for the degreasing may be appropriately selected in accordance with the species and the quantities of the organic substance(s). The temperature and the period therefor are preferably 700°C and 20 minutes, respectively.

The honeycomb unit 11 or the honeycomb structure 10 may be immersed into an aqueous solution containing copper ions to subject the two zeolite species to ion exchange. It is also allowable to use a raw material paste containing at least one of an SAPO subjected to ion exchange with copper ions and a CHA subjected to ion exchange with copper ions.

Fig. 2 illustrates an example of an exhaust gas purging device having a honeycomb structure of the present invention. This example, which is an exhaust gas purging device 100, can be produced by canning a honeycomb structure 10 into a metallic container (shell) 30 in the state that a holding sealing material 20 is arranged on the outer circumferential portion of the honeycomb structure 10. In the exhaust gas purging device 100, a jetting nozzle or any other jetting means (not illustrated), through which ammonia or a compound that is decomposed to generate ammonia is to be jetted, is located inside a pipe (not illustrated) positioned at the upstream side of the honeycomb structure 10, so as to face a direction in which an exhaust gas flows. In this way, ammonia is added to the exhaust gas flowing in the pipe, so that NOx contained in the exhaust gas is reduced through the two zeolite species contained in the honeycomb unit 11.

The compound, which is decomposed to generate ammonia, is not particularly limited as far as the compound can be heated through the exhaust gas inside the pipe to generate ammonia. Urea water is preferred since this substance is excellent in storage stability.

Urea water is heated through the exhaust gas inside the pipe to be hydrolyzed, so that ammonia is generated.

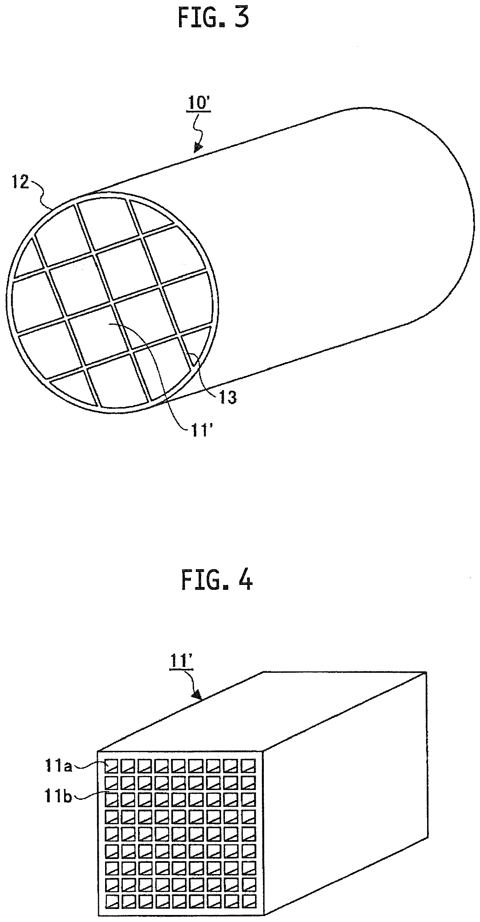

Fig. 3 is another example of the honeycomb structure of the present invention. This example, which is a honeycomb structure 10', has the same construction as the honeycomb structure 10 except that honeycomb units 11' (see Fig. 4) are bonded to each other through an adhesive layer 13, the honeycomb units 11' being units in each of which the plurality of through holes 11a are arranged side by side with a partition wall 11b therebetween to be extended in the longitudinal direction of the unit.

About each of the honeycomb units 11', the sectional area of any cross section perpendicular to the longitudinal direction is preferably from 10 to 200 cm$^2$. If the sectional area of the cross section of the honeycomb unit 11', which is perpendicular to the longitudinal direction, is less than 10 cm$^2$, the honeycomb structure 10' is increased in pressure loss. Conversely, if the sectional area of the cross section of the honeycomb unit 11', which is perpendicular to the longitudinal direction, is more than 200 cm$^2$, the strength of the honeycomb unit 11' becomes insufficient for thermal stress generated in the honeycomb unit 11'.

The honeycomb units 11' each have the same construction as the honeycomb unit 11 except the sectional area of any cross section of the unit 11' that is perpendicular to the longitudinal direction.

The thickness of the adhesive layer 13 is preferably from 0.5 to 2.0 mm. If the thickness of the adhesive layer 13 is less than 0.5 mm, the honeycomb units 11' each become insufficient in adhesive strength. Conversely, if the thickness of the adhesive layer 13 is more than 2.0 mm, the honeycomb structure 10' is increased in pressure loss.

The following will describe an example of a method for producing the honeycomb structure 10'. In the same way as used to produce the honeycomb structure 10, rectangularly columnar honeycomb units 11' are initially produced. Next, a paste for an adhesive layer is painted onto the outer circumferential surface of each of the honeycomb units 11', which is a surface other than both end surfaces of the unit 11'. The honeycomb units 11' are successively bonded to each other, and the resultant is dried to solidify the paste to produce an assembly of the honeycomb units 11'.

The adhesive layer paste is not particularly limited. Examples thereof include a mixture of an inorganic binder and inorganic particles, a mixture of an inorganic binder and an inorganic fiber, and a mixture of an inorganic binder, inorganic particles, and an inorganic fiber.

The inorganic binder contained in the adhesive layer paste is not particularly limited, and is added as, for example, silica sol or aluminum sol. Two or more inorganic binders may be together used. It is particularly preferred to add the inorganic binder as silica sol.

The inorganic particles contained in the adhesive layer paste are not particularly limited. Examples thereof include carbide particles such as silicon carbide particles, and nitride particles such as silicon nitride particles and boron nitride particles. Two or more of such particle species may be together used. Particularly preferred are silicon carbide particles since the particles are excellent in thermoconductivity.

The inorganic fiber contained in the adhesive layer paste is not particularly limited. Examples thereof include silica alumina fiber, mullite fiber, alumina fiber, and silica fiber. Two or more of such fibers may be together used. Particularly preferred is alumina fiber.

The adhesive layer paste may also contain an organic binder.

The organic binder contained in the adhesive layer paste is not particularly limited. Examples thereof include polyvinyl alcohol, methylcellulose, ethylcellulose, and carboxymethylcellulose. Two or more of such binders may be together used.

The adhesive layer paste may further contain balloons, which are fine hollow spheres made of a ceramic oxide, a pore-making agent, and/or others.

The balloons contained in the adhesive layer paste are not particularly limited. Examples thereof include alumina balloons, glass micro-balloons, volcanic soil balloons, fly ash balloons, and mullite balloons. Two or more of such balloon species may be together used. Particularly preferred are alumina balloons.

The pore-making agent contained in the adhesive layer paste is not particularly limited. Examples thereof include spherical acrylic particles, and graphite. Two or more pore-making agents may be together used.

Next, the assembly of the honeycomb units 11' is cut into a circularly columnar form, and then the cut assembly is polished as required. In this way, the circularly columnar assembly of the honeycomb units 11' is finished.

Instead of cutting the assembly of the honeycomb units 11' into the circularly columnar form, honeycomb units 11' each having a cross section shaped into a predetermined form, this section being perpendicular to the longitudinal direction, may be bonded to each other to produce a circularly columnar assembly of the honeycomb units 11'. At this time, the form of the cross section of each of the honeycomb units 11', which is perpendicular to the longitudinal direction, is preferably a fan-shaped form having a central angle of 90°.

Next, a paste for an outer circumferential coat layer is painted onto the outer circumferential surface of the circularly columnar assembly of the honeycomb units 11', which is a surface other than both end surfaces of the assembly.

The outer circumferential coat layer paste may be the same as or different from the above-mentioned adhesive layer paste.

Next, the circularly columnar assembly of the honeycomb units 11', on which the outer circumferential coat layer paste is painted, is dried to solidify the paste. In this way, a circularly columnar honeycomb structure 10' is produced. In this case, it is preferred to degrease the workpiece when the adhesive layer paste and/or the outer circumferential coat layer paste contain(s) the organic binder. Conditions for the degreasing may be appropriately selected in accordance with the species and the quantities of the organic substance(s). The temperature and the period therefor are preferably 700°C and 20 minutes, respectively.

The outer circumferential coat layer 12 may not be formed in each of the honeycomb structures 10 and 10'.

Examples

Hereinafter, the present invention will be more specifically described by way of working examples thereof. However, the present invention is not limited to the examples.

[Example 1]

The following were mixed with each other, and kneaded to produce a raw material paste 1: 2400 parts by mass of an SAPO; 507 parts by mass of a CHA; 827 parts by mass of boehmite; 1050 parts by mass of an alumina fiber having an average fiber diameter of 3 $\mu$m and an average fiber length of 100 $\mu$m; 436 parts by mass of methylcellulose; 441 parts by mass of sorbitan trioleate as a shaping aid; and 2749 parts by mass of ion exchange water. The used SAPO was an SAPO having a particle diameter of 1.9 $\mu$m, a specific gravity of 2.73, and a composition ratio Si/(Si + Al + P) of 0.13, a specific surface area of 483 $m^2$/g, and a Cu ion exchange quantity proportion of 4.1% by mass in terms of that of copper oxide. The used CHA was a CHA having a particle diameter of 2.4 $\mu$m, a specific gravity of 2.31, and a composition ratio Si/Al of 2.6, a specific surface area of 534 $m^2$/g, and a Cu ion exchange quantity proportion of 6.3% by mass in terms of that of copper oxide.

Next, an extruder was used to extrude the raw material paste 1 to produce honeycomb shaped bodies in the form of a square column. A pressure-reduction microwave drier was used to dry the honeycomb shaped bodies at a power of 4.5 kW under a reduced pressure of 6.7 kPa for 7 minutes, and then the dried bodies were degreased and fired at 700°C for 2 hours to produce honeycomb fired bodies. The fired bodies, which were honeycomb units 11', were each in the form of a square column having a square side length of 38 mm and a length of 150 mm. The density of the through holes 11a therein was 124 holes/cm$^2$, and the thickness of the partition wall 11b was 0.20 mm.

Next, the following were mixed with each other, and kneaded to produce an adhesive layer paste: 767 parts of an alumina fiber having an average fiber diameter of 0.5 $\mu$m and an average fiber length of 15 $\mu$m; 2500 parts of silica glass; 17 parts of carboxymethylcellulose; 600 parts of silica sol, the solid content by percentage therein being 30% by mass; 167 parts of polyvinyl alcohol; 167 parts of a surfactant; and 17 parts of alumina balloons.

The adhesive layer paste was painted onto the outer circumferential surface of each of the honeycomb units 11', which was a surface other than both ends of the unit, to give an adhesive layer 13 having a thickness of 2.0 mm. Sixteen of the honeycomb units 11' were then bonded to each other, and the resultant workpiece was dried at 150°C for 10 minutes to solidify the paste. Next, a diamond cutter was used to cut the workpiece into a circularly columnar form to make any cross section thereof that is perpendicular to the longitudinal direction substantially centrosymmetric. In this way, an assembly of the honeycomb units 11' was produced.

Furthermore, the adhesive layer paste was painted onto the outer circumferential surface of the assembly of the honeycomb units 11', which was a surface other than both ends of the assembly, to give an outer circumferential coat layer 12 of 1.0 mm thickness. A microwave drier and a hot wind drier were then used to dry and solidify the adhesive layer paste at 150°C for 10 minutes. The dried body was degreased at 400°C for 2 hours to produce a honeycomb structure 10' in the form of a circular column having a diameter of 160 mm and a length of 150 mm.

[Example 2]

A honeycomb structure 10' was produced in the same way as Example 1 except that the addition amount of the SAPO and that of the CHA were changed to 2700 parts by mass and 979 parts by mass, respectively; and the amount of boehmite was changed to 945 parts by mass, that of the alumina fiber to 1200 parts by mass, that of methylcellulose to 529 parts by mass, that of sorbitan trioleate to 501 parts by mass, and that of ion exchange water to 3331 parts by mass.

[Example 3]

A honeycomb structure 10' was produced in the same way as Example 1 except that the addition amount of the SAPO and that of the CHA were changed to 2700 parts by mass and 1523 parts by mass, respectively; and the amount of boehmite was changed to 1102 parts by mass, that of the alumina fiber to 1401 parts by mass, that of methylcellulose to 570 parts by mass, that of sorbitan trioleate to 581 parts by mass, and that of ion exchange water to 3592 parts by mass.

[Example 4]

A honeycomb structure 10' was produced in the same way as Example 1 except that the addition amount of the SAPO and that of the CHA were changed to 2700 parts by mass and 2285 parts by mass, respectively; and the amount of boehmite was changed to 1322 parts by mass, that of the alumina fiber to 1681 parts by mass, that of methylcellulose to 677 parts by mass, that of sorbitan trioleate to 694 parts by mass, and that of ion exchange water to 4285 parts by mass.

[Comparative Example 1]

A honeycomb structure 10' was produced in the same way as Example 1 except that the addition amount of the SAPO and that of the CHA were changed to 3000 parts by mass and 0 part by mass, respectively; and the amount of boehmite was changed to 735 parts by mass, that of the alumina fiber to 934 parts by mass, that of methylcellulose to 396 parts by mass, that of sorbitan trioleate to 396 parts by mass, and that of ion exchange water to 2493 parts by mass.

[Comparative Example 2]

A honeycomb structure 10' was produced in the same way as Example 1 except that the addition amount of the SAPO and that of the CHA were changed to 0 part by mass and 3000 parts by mass, respectively; and the amount of boehmite was changed to 868 parts by mass, that of the alumina fiber to 1103 parts by mass, that of methylcellulose to 392 parts by mass, that of sorbitan trioleate to 443 parts by mass, and that of ion exchange water to 2471 parts by mass.

[Water-adsorption/dehydration volume change rate]

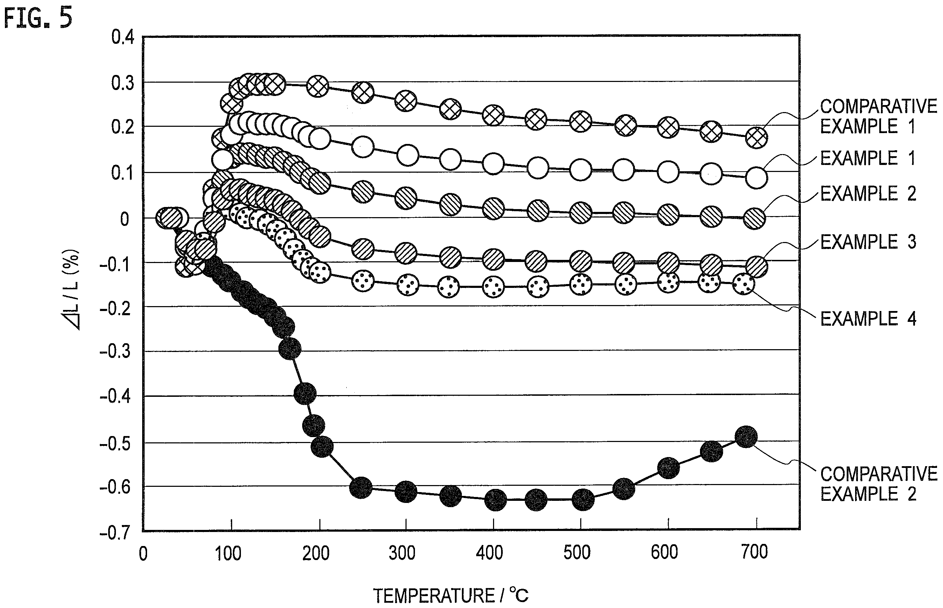

From any one of the honeycomb units produced from each of Examples 1 to 4 and Comparative Examples 1 and 2, a diamond cutter was used to cut out a test specimen in the form of a square column having a square side of 5 mm and a height of 25 mm. The temperature of the test specimen was raised from room temperature to 700°C at a temperature-raising rate of 10°C/minute. Thereafter, the temperature was lowered to 50°C. A thermal expansion meter (NETZSCH DIL402C, manufactured by Bruker Corp.) was used to measure the water-adsorption/dehydration volume change rate in the diameter direction of the honeycomb unit at intervals of 10°C in this temperature-raising/temperature-lowering process. The measurement was made in an atmosphere in which the flow rate of He was 100 ml/minute. The measurement results are shown in Table 1 and as a graph in Fig. 5.
In the honeycomb structures of Examples 1 to 4, the respective volume change rates were able to be restrained into the range of ±0.20% while the Comparative Example 1, in which the proportion of the SAPO was 100%, showed a volume change rate of +0.30% and Comparative Example 2, in which the proportion of the CHA was 100%, showed a volume change rage of -0.64%.

[Crack evaluation]

From any one of the honeycomb units produced from each of Examples 1 to 4 and Comparative Examples 1 and 2, a diamond cutter was used to cut out a test specimen in the form of a square column having a square side of 35 mm and a height of 80 mm. After made into a bone-dry state, the test specimen was allowed to stand still in a humidity-adjusting room (temperature: 25°C; and humidity: 60% RH) for 4 hours to be caused to adsorb water. Thereafter, the length of a possible crack therein was measured. As a result, it has been able to be verified that when the volume change rate is in the range of ±0.2%, only such fine cracks that the honeycomb unit is not broken are generated, and when the volume change rate is in the range of ±0.14%, cracks observable with the naked eye are not generated.

[NOx purging performance]

From any one of the honeycomb units produced from each of Example 4 and Comparative Examples 1 and 2, a diamond cutter was used to cut out a test specimen in the form of a circular column having a diameter of 1 inch and a length of 3 inches. While a simulation gas of 200°C temperature was caused to flow at a spatial velocity (SV) of 80000/hour toward the test specimen, a catalyst evaluation machine (SIGU-2000/MEXA-6000FT, manufactured by Horiba Ltd.) was used to measure the outflow rate of NOx flowing out from the sample. The NOx purge percentage [%] of the test specimen was then calculated, which is represented by the following expression:

$$\text{(NOx inflow rate - NOx outflow rate)/(NOx outflow rate)}$$

$$\times 100$$

The calculated results are shown in Table 1. The constituent components of the simulation gas were as follows: 350 ppm of nitrogen monooxide; 350 ppm of ammonia; 10% of oxygen; 5% of carbon dioxide; 4.6% of water; and nitrogen (as the balance).

According to Table 1, about the initial NOx purging performance of the honeycomb unit of each of Example 4 and Comparative Examples 1 and 2, a high value of 85% or more was shown.

About the honeycomb units of Examples 1 to 3, the respective NOx purging performances thereof were not evaluated. However, these examples were different from each other only in blend ratio between the SAPO and the CHA; thus, it can be presumed that these examples gave a NOx purging performance value of 85% or more in light of the NOx purging performance values of Example 4 and Comparative Examples 1 and 2.

[Hydration deterioration endurability]

From any one of the honeycomb units produced from each of Example 4 and Comparative Examples 1 and 2, a diamond cutter was used to cut out a test specimen in the form of a circular column having a diameter of 1 inch and a length of 3 inches. The test specimen was allowed to stand still in a furnace the temperature of which was kept at 80°C. A gas containing 93% by mass of nitrogen and 7% by mass of water was circulated at a flow rate of 1 L/minute therein as a carrier gas. After 24 hours elapsed, the same operation as in the afore-mentioned "NOx purging performance" was applied to the test specimen to calculate the NOx purge percentage [%]. These operations were rendered one cycle, and this cycle was repeated 6 times. The value of the NOx purging performance in the sixth cycle is described in Table 1.

In Comparative Example 1, the NOx purging performance value after the hydration deterioration endurance was largely lowered into 74% from the initial value. However, in Example 4, even after the hydration deterioration endurance, a high NOx purging performance value of 85% was shown.

About the honeycomb units of Examples 1 to 3, the respective NOx purging performances thereof after the hydration deterioration endurance were not evaluated. However, these examples were different from each other only in blend ratio between the SAPO and the CHA; thus, it can be presumed that these examples gave a NOx purging performance value of 85% or more in light of the NOx purging performance values of Example 4 and Comparative Example 2 after the hydration deterioration endurance.

[Table 1]

|  | SAPO : CHA | Volume change rate (%) | NOx purging performance (%) | NOx purging performance (%) after hydration deterioration endurance |
|---|---|---|---|---|
| Example 1 | 8:2 | +0.20 | - | - |
| Example 2 | 7:3 | +0.14 | - | - |
| Example 3 | 6:4 | -0.12 | - | - |
| Example 4 | 5:5 | -0.16 | 87 | 85 |
| Comparative Example 1 | 10:0 | +0.30 | 94 | 74 |
| Comparative Example 2 | 0:10 | -0.64 | 90 | 90 |

From Table 1 and Fig. 5, it is understood that: the honeycomb structure of each of Examples 1 to 4 is small in volume change rate according to the water-adsorption/dehydration, and has no risk of being cracked to be damaged when used as an SCR catalyst; and the honeycomb structure of Example 4 can gain a high NOx purging performance value of 85% or more at the initial stage and even after the hydration deterioration endurance.

Reference Signs List

10 and 10': Honeycomb structures
11 and 11': Honeycomb units
11a: Through hole
11b: Partition wall
12: Outer circumferential coat layer
13: Adhesive layer

20: Holding sealing material
30: Metallic container
100: Exhaust gas purging device

**Claims**

1. A honeycomb structure, having a honeycomb unit that has a plurality of through holes arranged side by side with a partition wall therebetween to be extended in a longitudinal direction of the unit,

   the partition wall comprising two zeolite species and an inorganic binder, wherein one of the two zeolite species is a silicoaluminophosphate (SAPO) having a composition ratio $Si/(Si + Al + P)$ of 0.1 to 0.25, and the other species is an aluminosilicate having a CHA type structure (CHA) and a mole ratio $Si/Al$ of 2 to 10, and wherein in the two zeolite species, the blend ratio between the raw materials SAPO and CHA (the ratio by mass of SAPO to CHA) is from 8 : 2 to 2 : 8.

2. The honeycomb structure according to claim 1, wherein the SAPO and the CHA are salts subjected to ion exchange with copper ions.

3. The honeycomb structure according to any one of claims 1 or 2, wherein the inorganic binder is a solid component contained in one or more selected from the group consisting of alumina sol, silica sol, titania sol, water glass, sepiolite, attapulgite and boehmite.

4. The honeycomb structure according to any one of claims 1 to 3, wherein the honeycomb unit further comprises one or more selected from the group consisting of an inorganic fiber, a scaly substance, a tetrapod-form substance, and a three-dimensional needle-form substance.

5. The honeycomb structure according to claim 4, wherein the inorganic fiber is one or more selected from the group consisting of alumina, silica, silicon carbide, silica alumina, glass, potassium titanate, and aluminum borate,

   the scaly substance is one or more selected from the group consisting of glass, white mica, alumina, and silica, the tetrapod-form substance is zinc oxide, and the three-dimensional needle-form substance is one or more selected from the group consisting of alumina, silica, silicon carbide, silica alumina, glass, potassium titanate, aluminum borate, and boehmite.

**Patentansprüche**

1. Wabenstruktur, die eine Wabeneinheit aufweist, die eine Mehrzahl von Durchgangsöffnungen aufweist, die Seite an Seite, mit einer Trennwand dazwischen, so angeordnet sind, dass sie sich in einer Längsrichtung der Einheit ausdehnen,

   wobei die Trennwand zwei Zeolithspezies und ein anorganisches Bindemittel umfasst, wobei eine der zwei Zeolithspezies ein Silicoaluminophosphat (SAPO) mit einem Zusammensetzungsverhältnis $Si/(Si + Al + P)$ von 0,1 bis 0,25 ist und die andere Spezies ein Alumosilikat mit einer Struktur vom CHA-Typ (CHA) und einem Molverhältnis $Si/Al$ von 2 bis 10 ist und wobei bei den zwei Zeolithspezies das Mischungsverhältnis zwischen den Rohmaterialien SAPO und CHA (das Massenverhältnis von SAPO zu CHA) von 8:2 bis 2:8 beträgt.

2. Wabenstruktur nach Anspruch 1, wobei das SAPO und das CHA Salze sind, die einem Ionenaustausch mit Kupferionen unterzogen wurden.

3. Wabenstruktur nach einem der Ansprüche 1 oder 2, wobei das anorganische Bindemittel eine feste Komponente ist, die in einer oder mehreren (Substanzen), die aus der aus Aluminiumoxid-Sol, Siliciumdioxid-Sol, Titandioxid-Sol, Wasserglas, Sepiolith, Attapulgit und Böhmit bestehenden Gruppe ausgewählt sind, enthalten ist.

**4.** Wabenstruktur nach einem der Ansprüche 1 bis 3, wobei die Wabeneinheit ferner eine oder mehrere (Substanzen) umfasst, die aus der Gruppe ausgewählt sind, die aus einer anorganischen Faser, einer schuppenartigen Substanz, einer tedrapodenförmigen Substanz und einer die Form einer dreidimensionalen Nadel aufweisenden Substanz besteht.

**5.** Wabenstruktur nach Anspruch 4, wobei die anorganische Faser eine oder mehrere (Substanzen) ist, die aus der Gruppe ausgewählt sind, die aus Aluminiumoxid, Siliciumdioxid, Siliciumcarbid, Siliciumdioxid-Aluminiumoxid, Glas, Kaliumtitanat und Aluminiumborat besteht,

die schuppenförmige Substanz eine oder mehrere (Substanzen) ist, die aus der Gruppe ausgewählt sind, die aus Glas, weißem Glimmer, Aluminiumoxid und Siliciumdioxid besteht,
die tetrapodenförmige Substanz Zinkoxid ist und
die eine dreidimensionale Nadelform aufweisende Substanz eine oder mehrere (Substanzen) ist, die aus der Gruppe ausgewählt sind, die aus Aluminiumoxid, Siliciumdioxid, Siliciumcarbid, Siliciumdioxid-Aluminiumoxid, Glas, Kaliumtitanat, Aluminiumborat und Böhmit besteht.

**Revendications**

**1.** Structure en nid d'abeilles, ayant une unité en nid d'abeilles qui comporte une pluralité de trous perforant agencés côte à côte avec une paroi de séparation située entre ceux-ci devant être étendue dans une direction longitudinale de l'unité,
la paroi de séparation comprenant deux espèces de zéolites et un liant inorganique, dans laquelle une des deux espèces de zéolites est un silicoaluminophosphate (SAPO) ayant un rapport de composition Si / (Si + Al + P) compris entre 0,1 et 0,25, et l'autre espèce est un aluminosilicate ayant une structure de type CHA (CHA) et un rapport molaire Si / Al compris entre 2 et 10, et
dans laquelle dans les deux espèces de zéolites, le rapport de mélange entre les matières premières SAPO et CHA (le rapport en masse de SAPO à CHA) est compris entre 8 : 2 et 2 : 8

**2.** Structure en nid d'abeilles selon la revendication 1, dans laquelle le SAPO et le CHA sont des sels assujettis à un échange ionique avec des ions de cuivre.

**3.** Structure en nid d'abeilles selon l'une quelconque des revendications 1 ou 2, dans laquelle le liant inorganique est un composant solide contenu dans au moins un (composé) choisi dans le groupe constitué du sol d'alumine, du sol de silice, du sol d'oxyde de titane, du verre d'eau, de la sépiolite, de l'attapulgite et de la boéhmite.

**4.** Structure en nid d'abeilles selon l'une quelconque des revendications 1 à 3, dans laquelle l'unité en nid d'abeilles comprend en outre au moins une substance choisie dans le groupe constitué d'une fibre inorganique, d'une substance écailleuse, d'une substance en forme de tétrapode et d'une substance tridimensionnelle en forme d'aiguille.

**5.** Structure en nid d'abeilles selon la revendication 4, dans laquelle la fibre inorganique est au moins une substance choisie dans le groupe constitué de l'alumine, de la silice, du carbure de silicium, de la silice alumine, du verre, du titanate de potassium et du borate d'aluminium,
la substance écailleuse est au moins une substance choisie dans le groupe constitué du verre, du mica blanc, de l'alumine et de la silice,
la substance en forme de tétrapode est de l'oxyde de zinc, et
la substance tridimensionnelle en forme d'aiguille est au moins une substance choisie dans le groupe constitué de l'alumine, de la silice, du carbure de silicium, de la silice alumine, du verre, du titanate de potassium, du borate aluminium et de la boéhmite.

# FIG. 1

# FIG. 2

EXHAUST GAS

## FIG. 3

## FIG. 4

FIG. 5

EP 2 905 075 B1

## REFERENCES CITED IN THE DESCRIPTION

**Patent documents cited in the description**

- WO 2011061836 A1
- EP 2324905 A1
- EP 2845646 A2
- EP 2324921 A1
- JP 2012136407 A